# EUROPÄISCHE PATENTSCHRIFT

(11) **EP 4 105 080 B1**
(45) Veröffentlichungstag und Bekanntmachung des Hinweises auf die Patenterteilung: **31.07.2024**
(21) Anmeldenummer: 21179194.2
(22) Anmeldetag: 14.06.2021
(51) Int. Cl.: B60P 3/025, A21B 1/52, B60N 3/16, F24C 15/30

(54) **MOBILKONVEKTOMATEN-SYSTEM UND VERFAHREN ZUM BETREIBEN EINES MOBILKONVEKTOMATEN**
MOBILE CONVECTION OVEN SYSTEM AND METHOD FOR OPERATING SAME
SYSTÈME DE FOUR À CONVECTION MOBILE ET PROCÉDÉ DE FONCTIONNEMENT DU MÊME

(43) Veröffentlichungstag der Anmeldung: 21.12.2022
(73) Patentinhaber: JATA GmbH, 26188 Edewecht (DE)
(72) Erfinder: JANßEN, Kai, 26188 Edewecht (DE); TAPKEN, Christian, 26316 Varel (DE)
(74) Vertreter: Glawe, Delfs, Moll

(56) Entgegenhaltungen:
- WO-A1-2019/014023
- US-A- 4 919 477
- US-A1- 2014 370 167

## Beschreibung

Die Erfindung betrifft ein Mobilkonvektomaten-System und ein Verfahren zum Betreiben eines Mobilkonvektomaten.

Wenn Menülieferanten verzehrfertige Menüs nach Hause liefern, handelt es sich üblicherweise um vorzubereitete Menüs, die in einem vorangegangenen Vorgang gegart, portioniert und tiefgefroren wurden. Vor der Übergabe an den Kunden werden die vorzubereiteten Menüs aufgewärmt, so dass der Kunde das Menü direkt nach Empfang verzehren kann.

Für die Auslieferung der Menüs zu den Kunden werden Fahrzeugflotten betrieben, bei denen die Fahrzeuge mit Mobilkonvektomaten ausgestattet sind. Die vorzubereiteten Menüs werden in eine Heizkammer des Mobilkonvektomaten eingebracht, so dass die Menüs während der Fahrt zum Kunden erwärmt werden können. Der Einsatzzeitraum einer solchen Fahrzeugflotte während eines Tages ist begrenzt, weil Menüs üblicherweise nur während der Mittagessens- und Abendessenszeit ausgeliefert werden. Die restliche Zeit des Tages steht die Fahrzeugflotte mit den Mobilkonvektomaten still.

Das Dokument US 2014/370167 A1 beschreibt ein portables Koch-und Liefersystem mit einem Fahrzeug samt Ladefläche, auf der ein Ofengestell mit mehreren Heizkammern transportiert werden kann. Dazu wird das Ofengestell auf Rollen in das Fahrzeug gerollt und dann wandseitig gesichert.

Das Dokument WO 2019/014023 A1 betrifft ein Auslieferungsfahrzeug für Speisen, die unterwegs zubereitet werden können. Das Fahrzeug kann über eine rückseitige Öffnung mit auf Rollen gelagerten Öfen beladen werden.

Bei dem Dokument US 4 919 477 A handelt es sich um ein Fahrzeug zur Zubereitung und Auslieferung von Pizza samt Pizzaofen und Kühlschrank. Der Pizzaofen ist so angeordnet, dass der Fahrer direkt aus der Fahrerposition eine ungebackene Pizza in den Ofen einlegen kann.

Der Erfindung liegt die Aufgabe zugrunde, ein Mobilkonvektomaten-System und ein Verfahren zum Betreiben eines Mobilkonvektomaten vorzustellen, mit denen ein effizienterer Betrieb einer Fahrzeugflotte ermöglicht wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Das erfindungsgemäße System umfasst einen Mobilkonvektomaten und ein Andockmodul. Das Andockmodul ist dazu ausgelegt, mit einem Fahrzeug verbunden zu werden und den Mobilkonvektomaten zu tragen. Der Mobilkonvektomat umfasst eine Heizkammer zum Aufwärmen vorzubereiteter Menüs. Das System umfasst einen Verriegelungsmechanismus, der umschaltbar ist zwischen einem verriegelten Zustand, in dem der Mobilkonvektomat mit dem Andockmodul verriegelt ist, und einem entriegelten Zustand, in dem der Mobilkonvektomat ohne Verriegelung auf dem Andockmodul aufliegt. Der Mobilkonvektomat hat eine Hebestruktur, die für ein Hubgerät zugänglich ist, wenn der Mobilkonvektomat auf dem Andockmodul aufliegt. Der Mobilkonvektomat umfasst einen Einfüllstutzen für Kraftstoff, der zwischen einem eingefahrenen Zustand und einem ausgefahrenen Zustand verfahrbar ist.

Der erfindungsgemäße Mobilkonvektomat ist so gestaltet, dass er in einem täglichen Betriebsablauf in ein Fahrzeug eingesetzt und aus dem Fahrzeug entfernt werden kann. Damit wird die Möglichkeit eröffnet, dass ein Fahrzeug im Verlaufe eines Tages phasenweise zum Zwecke der Menüauslieferung und phasenweise zu anderen Zwecken verwendet wird. Beispielsweise kann ein Fahrer morgens und nachmittags Lieferdienste oder Botendienste ausführen und in der Mittagszeit und Abendzeit Menüauslieferung betreiben. Dies ist nicht möglich mit bekannten Mobilkonvektomaten (z.B. EP 1 825 796 A1), bei denen der Mobilkonvektomat nur im Rahmen eines Werkstattaufenthalts von dem Fahrzeug entfernt werden kann. Ein Einsatz solcher Fahrzeuge zu anderen Zwecken als der Menüauslieferung ist nicht wirtschaftlich sinnvoll möglich, weil die Mobilkonvektomaten die Ladefläche des Fahrzeugs zu einem großen Teil ausfüllen.

Das System kann so gestaltet sein, dass die Unterseite des Mobilkonvektomaten durch das Andockmodul auf Abstand von der Ladefläche des Fahrzeugs gehalten wird, so dass die Gabel eines Hubgeräts zwischen der Unterseite des Mobilkonvektomaten und der Ladefläche eingeführt werden kann. Die Hebestruktur kann an der Unterseite des Mobilkonvektomats angeordnet sein, so dass der Mobilkonvektomat durch Anheben der Gabel von dem Andockmodul abgehoben werden kann. Möglich sind auch anders gestaltete Hebestrukturen, die aber vorzugsweise alle so gestaltet sind, dass an der Hebestruktur mit der Gabel eines Hubgeräts angegriffen werden kann.

Das Andockmodul kann zwei Längsträger umfassen, die sich in Längsrichtung des Fahrzeugs erstrecken, wenn das Andockmodul mit dem Fahrzeug, insbesondere mit der Ladefläche eines Lieferwagens verbunden ist. Die Hebestruktur des Mobilkonvektomaten kann zwischen den Längsträgern angeordnet sein, wenn der Mobilkonvektomat auf dem Andockmodul aufliegt. Der seitliche Abstand zwischen den Längsträgern kann so bemessen sein, dass die Gabel eines üblichen Hubgeräts zwischen den Längsträgern eingeführt werden kann. Die Gabel eines üblichen Hubgeräts ist so bemessen, dass sie zum Anheben von Europaletten geeignet ist.

Das Andockmodul und/oder der Mobilkonvektomat können mit Einführschrägen versehen sein, so dass der Mobilkonvektomat sich beim Aufsetzen auf den Andockmodul selbsttätig relativ zu dem Andockmodul zentriert. Es kann eine Einführschräge für die Längsvorrichtung und/oder eine Einführschräge für die Querrichtung vorgesehen sein.

Der Verriegelungsmechanismus kann so gestaltet sein, dass er im verriegelten Zustand den Mobilkonvektomat in einer für den Straßenverkehr geeigneten Weise mit dem Andockmodul verriegelt und im entriegelten Zustand ein freies Abheben des Mobilkonvektomaten von dem Andockmodul ermöglicht.

Der Verriegelungsmechanismus kann einen Riegel umfassen, der im verriegelten Zustand eine Verriegelungsstruktur hintergreift. Der Riegel kann als Drehriegel ausgebildet sein, der zwischen dem verriegelten Zustand und dem freien Zustand um eine Achse, insbesondere um eine vertikale Achse gedreht wird. Der Riegel kann mit dem Mobilkonvektomat verbunden sein, während die Verriegelungsstruktur ein Element des Andockmoduls ist. Möglich ist auch die umgekehrte Gestaltung.

Der Verriegelungsmechanismus kann eine Mehrzahl von Riegeln umfassen, so dass eine Mehrfachsicherung zwischen dem Mobilkonvektomat und dem Andockmodul ermöglicht wird. In einer Ausführungsform umfasst der Verriegelungsmechanismus vier Riegel, so dass die Verbindung zwischen dem Mobilkonvektomat und einem ersten Längsträger des Andockmoduls mit zwei Riegeln gesichert ist und die Verbindung zwischen dem Mobilkonvektomat und einem zweiten Längsträger des Andockmoduls mit zwei Riegeln gesichert ist.

Eine Mehrzahl von Riegeln des Verriegelungsmechanismus können miteinander gekoppelt sein, so dass durch Betätigen eines einzelnen Betätigungselement die Mehrzahl von Riegeln zwischen dem verriegelten Zustand und dem freien Zustand bewegt werden kann. In einer Ausführungsform umfasst die Mehrzahl von Riegeln sowohl Riegel, die mit dem ersten Längsträger des Andockmoduls in Eingriff stehen, als auch Riegel, die mit dem zweiten Längsträger des Andockmoduls in Eingriff stehen.

Die Kopplung der Riegel kann über ein oder mehrere Kopplungsstangen bestehen, so dass die Bewegung eines Riegels über die Kopplungsstangen in die Bewegung eines anderen Riegels übersetzt wird. Die Kopplungsstangen und/oder ein Betätigungselement zur gekoppelten Betätigung des Verriegelungsmechanismus können ein Element des Mobilkonvektomaten sein. Der Verriegelungsmechanismus kann so gestaltet sein, dass er im verriegelten Zustand einrastet und dass ein Betätigen des Verriegelungsmechanismus aus dem verriegelten Zustand heraus erst nach Aufheben einer Sperre möglich ist.

Der Mobilkonvektomat kann eine Heizeinrichtung zum Erwärmen der Heizkammer aufweisen. Es kann ein Gebläse vorgesehen sein, um die mit der Heizeinrichtung erzeugte Wärme der Heizkammer zuzuführen. Der Mobilkonvektomat kann einen Wärmetauscher umfassen, mit dem die von der Heizeinrichtung erzeugte Wärme auf dem in die Heizkammer geführten Luftstrom übertragen wird. Die Heizeinrichtung kann kraftstoffbetrieben sein, so dass die Wärme durch Verbrennen eines Kraftstoffs, beispielsweise durch Verbrennen von Diesel-Kraftstoff erzeugt wird. Der Mobilkonvektomat kann einen Tank für den Kraftstoff umfassen, aus dem der zum Erwärmen der Heizkammer bestimmte Kraftstoff zugeführt wird.

Der Mobilkonvektomat ist mit einem Einfüllstutzen versehen, der so gestaltet sein kann, dass der Tank an einer üblichen, für Kraftfahrzeuge bestimmten Tankstelle befüllt werden kann. Der Einfüllstutzen ist zwischen einem eingefahrenen Zustand und einem ausgefahrenen Zustand verfahrbar. Im eigefahrenen Zustand kann die Einfüllöffnung des Einfüllstutzens innerhalb eines Gehäuses des Mobilkonvektomaten angeordnet sein. Im ausgefahrenen Zustand kann die Einfüllöffnung des Einfüllstutzens außerhalb des Gehäuses des Mobilkonvektomaten angeordnet sein. Vorzugsweise ist die Einfüllöffnung des Einfüllstutzens im ausgefahrenen Zustand außerhalb des Innenraums des Fahrzeugs angeordnet, mit dem der Mobilkonvektomat verbunden ist. Der Mobilkonvektomat kann einen Schwenkmechanismus umfassen, so dass der Einfüllstutzen mit einer Schwenkbewegung zwischen dem eingefahrenen und dem ausgefahrenen Zustand verfahren werden kann. Zwischen der Einfüllöffnung und dem Tank kann sich ein flexibler Schlauch erstrecken, der beim Verfahren der Einfüllöffnung verformt wird.

Zusätzlich oder alternativ zu der kraftstoffbetriebenen Heizeinrichtung kann der Mobilkonvektomat eine elektrisch betriebene Heizeinrichtung aufweisen. Der Mobilkonvektomat kann mit einem Stecker versehen sein, über den die elektrische Heizeinrichtung an ein stationäres Stromnetz angeschlossen werden kann, um aus dem stationären Stromnetz mit Energie versorgt zu werden. Dies ermöglicht einen Betrieb, bei dem der Mobilkonvektomat in einem von dem Fahrzeug getrennten Zustand (stationärer Zustand) mit der elektrischen Heizeinrichtung vorerwärmt wird. Dies kann beispielsweise in einer Lagerhalle stattfinden, in der der Mobilkonvektomat über ein Kabel an das stationäre Stromnetz angeschlossen ist. Bevor die Menüs verzehrfertig sind, kann der Mobilkonvektomat in das Fahrzeug eingesetzt und mit dem Andockmodul verbunden werden. Der verbleibende Teil des Aufwärmvorgangs kann innerhalb des Fahrzeugs erfolgen, ohne dass der Mobilkonvektomat aus einem stationären Stromnetz mit Energie versorgt wird. Der verbleibende Teil des Aufwärmvorgangs kann mit der kraftstoffbetriebenen Heizeinrichtung durchgeführt werden. Wird alternativ der verbleibende Teil des Aufwärmvorgangs mit der elektrischen Heizeinrichtung durchgeführt, so kann diese Heizeinrichtung aus einer Batterie gespeist werden.

Der Mobilkonvektomat kann eine Steuereinheit zum Ansteuern der Heizeinrichtung umfassen. Die Steuereinheit kann die Heizeinrichtung so ansteuern, dass die Menüs in der Heizkammer auf eine vorgegebene Temperatur erwärmt werden. Die vorgegebene Temperatur kann dem verzehrfertigen Zustand der Menüs entsprechen.

In einer Ausführungsform ist die Steuereinheit dazu ausgelegt, einen zweigeteilten Aufwärmvorgang anzusteuern, bei dem ein erster Teil des Aufwärmvorgangs in einem stationären Zustand erfolgt, in dem der Mobilkonvektomat von dem Fahrzeug getrennt ist, und bei dem ein zweiter Teil des Aufwärmvorgangs in einem mobilen Zustand erfolgt, in dem der Mobilkonvektomat mit dem Fahrzeug verbunden ist. Die beiden Teile des Aufwärmvorgangs können so aufeinander abgestimmt sein, dass die Menüs in der Heizkammer nach dem Ende des zweiten Teils des Aufwärmvorgangs in einem verzehrfertigen Zustand sind. Die Steuereinheit kann so eingerichtet sein, dass sie die Länge einer Pause zwischen dem Ende des ersten Teils des Aufwärmvorgangs und dem Beginn des zweiten Teils des Aufwärmvorgangs misst und den zweiten Teil des Aufwärmvorgangs in Abhängigkeit von der Länge der Pause ansteuert.

Der Mobilkonvektomat kann eine Batterie umfassen, aus der die Steuereinheit versorgt wird, wenn der Mobilkonvektomat weder an ein stationäres Stromnetz noch an die Stromversorgung eines Kraftfahrzeugs angeschlossen ist. Die Batterie kann aus dem stationären Stromnetz oder der Stromversorgung des Kraftfahrzeugs aufgeladen werden, wenn ein entsprechender Anschluss zu dem Mobilkonvektomaten besteht. Die Steuereinheit kann zusätzlich oder alternativ dazu direkt aus dem stationären Stromnetz oder der Stromversorgung des Kraftfahrzeugs gespeist werden. Zusätzlich oder alternativ dazu kann mit der Batterie ein Gebläse gespeist werden, mit dem ein Luftstrom durch die Heizkammer hindurch angetrieben wird. Die Steuereinheit und/oder das Gebläse können unabhängig davon versorgt werden, ob auch die elektrische Heizeinrichtung mit Strom gespeist wird.

Die Steuereinheit, die kraftstoffbetriebene Heizeinrichtung und/oder die elektrisch betriebene Heizeinrichtung können in einer Baueinheit zusammengefasst sein, die lösbar mit einem Gehäuse des Mobilkonvektomaten verbunden ist. Zu Wartungszwecken kann die Baueinheit von dem Gehäuse des Mobilkonvektomaten gelöst werden, so dass der Zugang zu den in der Baueinheit zusammengefassten Komponenten erleichtert wird.

Zwischen dem Mobilkonvektomaten und dem Andockmodul kann eine elektrische Steckverbindung bestehen. Der Steckverbinder des Andockmoduls kann an das Stromnetz des Fahrzeugs angeschlossen sein. Der Steckverbinder des Mobilkonvektomaten kann an elektrische Komponenten des Mobilkonvektomaten angeschlossen sein wie beispielsweise die Steuereinheit. Der Steckverbinder des Mobilkonvektomaten kann so ausgebildet sein, dass es nicht möglich ist, die elektrische Heizeinrichtung des Mobilkonvektomaten über den Steckverbinder zu betreiben.

Die elektrische Steckverbindung kann so gestaltet sein, dass sie mit dem Aufsetzen des Mobilkonvektomaten auf das Andockmodul in Eingriff gebracht wird und dass sie mit dem Abheben des Mobilkonvektomaten von dem Andockmodul getrennt wird. Der männliche Teil der Steckverbindung kann dazu einen vertikal ausgerichteten Steckkontakt aufweisen. Der weibliche Teil der Steckverbindung kann eine vertikal ausgerichtete Fläche zur Aufnahme des Steckkontakt aufweisen.

Die kraftstoffbetriebene Heizeinrichtung kann eine Abgasleitung umfassen, die aus dem Innenraum des Fahrzeugs nach außen geführt ist. Die Abgasleitung kann eine Schnittstelle haben, die getrennt wird, wenn der Mobilkonvektomat von dem Andockmodul abgehoben wird, und die verbunden wird, wenn der Mobilkonvektomat auf das Andockmodul aufgesetzt wird. Die Abgasleitung kann einen mit dem Andockmodul verbundenen Abschnitt umfassen, der durch eine Wand der Karosserie des Fahrzeugs aus dem Innenraum nach außen geführt ist.

Die Abgasleitung kann ein mit dem Andockmodul verbundenes Kupplungsstück und ein mit dem Mobilkonvektomaten verbundenes Kopplungsstück umfassen, die so eingerichtet sind, dass die Abgasleitung mit dem Aufsetzen des Mobilkonvektomaten auf das Andockmodul verbunden wird und dass die Abgasleitung mit dem Abheben des Mobilkonvektomaten von dem Andockmodul getrennt wird. Das Kupplungsstück des Andockmoduls kann mit einem Ventil versehen sein, das beim Herstellen der Verbindung mit dem Kupplungsstück des Mobilkonvektomaten geöffnet wird und das beim Trennen der Verbindung zu dem Kupplungsstück des Mobilkonvektomaten geschlossen wird. Das Ventilglied des Ventils kann unter einer Federkraft stehen, durch die das Ventil im geschlossenen Zustand gehalten wird. Im verbundenen Zustand der beiden Kupplungsstücke kann das Ventilglied entgegen der Federkraft im geöffneten Zustand gehalten sein.

Die Heizkammer des Mobilkonvektomaten kann eine Mehrzahl von Aufnahmefächern aufweisen, wobei jedes der Aufnahmefächer dazu ausgelegt ist, ein oder mehrere vorzubereitete Menüs aufzunehmen. Beispielsweise kann die Heizkammer zwischen drei und zehn, vorzugsweise zwischen fünf und acht Aufnahmefächer umfassen. Jedes Aufnahmefach kann dazu bestimmt sein, zwischen zwei und fünf vorzubereitete Menüs aufzunehmen. Die Heizkammer und die Heizeinrichtung können so zusammenwirken, dass alle Menüs in der Heizkammer gleichmäßig erwärmt werden.

Der Mobilkonvektomat kann eine erste Heizkammer und eine zweite Heizkammer aufweisen. Der Mobilkonvektomat kann so eingerichtet sein, dass die Menüs in der ersten Heizkammer unabhängig von den Menüs in der zweiten Heizkammer erwärmt werden. Die zweite Heizkammer kann mit einer Heizeinrichtung zusammenwirken, die von der Heizeinrichtung der ersten Heizkammer separat ist. Von der Erfindung umfasst sind Mobilkonvektomaten mit mehr als zwei Heizkammern. Alle genannten Merkmale einer Heizkammer oder Heizeinrichtung können bei jeder der Heizkammern bzw. Heizeinrichtungen vorhanden sein. Umfasst der Mobilkonvektomat eine Mehrzahl von kraftstoffbetriebenen Heizeinrichtungen, so kann für jede der Heizeinrichtungen eine Abgasleitung mit den beschriebenen Merkmalen vorgesehen sein.

Die Erfindung betrifft auch ein Fahrzeug, das mit einem solchen Mobilkonvektomaten ausgestattet ist. Das Andockmodul kann fest mit dem Fahrzeug verbunden sein. Beispielsweise kann das Andockmodul an der Bodenfläche eines Laderaums des Fahrzeugs befestigt sein. Ein mit dem Andockmodul verbundener Abschnitt einer Abgasleitung kann durch eine Karosseriewand hindurch nach außen geführt sein, so dass ein freies Ende der Abgasleitung außerhalb des Innenraums des Fahrzeugs mündet. Ein mit dem Andockmodul verbundenes Teil einer elektrischen Steckverbindung kann an das elektrische Netz des Fahrzeugs angeschlossen sein.

Die Erfindung betrifft außerdem ein Verfahren zum Aufwärmen vorzubereiteter Menüs, bei dem ein oder mehrere vorzubereitete Menüs in eine Heizkammer eines Mobilkonvektomaten eingebracht werden, bei dem eine erste Phase des Aufwärmvorgangs in einem stationären Betrieb durchgeführt wird, in dem eine Heizeinrichtung der Heizkammer aus einem stationären Stromnetz gespeist wird, bei dem der Mobilkonvektomat durch ein Hubgerät auf ein Andockmodul in einem Fahrzeug aufgelegt wird, und bei dem eine zweite Phase des Aufwärmvorgangs in einem mobilen Betrieb durchgeführt wird, in dem der Mobilkonvektomat mit einem Fahrzeug verbunden ist und in dem eine Heizeinrichtung der Heizkammer aus einer mit dem Fahrzeug verbundenen Energiequelle gespeist wird.

Für die erste Phase des Aufwärmvorgangs kann dieselbe Heizeinrichtung verwendet werden wie für die zweite Phase des Aufwärmvorgangs. Die Heizeinrichtung kann eine elektrische Heizeinrichtung sein, die im stationären Betrieb aus dem stationären Stromnetz und im mobilen Betrieb aus einer im Fahrzeug angeordneten Batterie betrieben wird. Alternativ kann für die erste Phase des Aufwärmvorgangs eine elektrisch betriebene Heizeinrichtung und für die zweite Phase des Aufwärmvorgangs eine kraftstoffbetriebene Heizeinrichtung verwendet werden.

Das Verfahren kann mit weiteren Merkmalen fortgebildet werden, die im Zusammenhang des erfindungsgemäßen Systems beschrieben sind. Das System kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes Fahrzeug;
- Fig. 2:: das Fahrzeug aus Fig. 1 in einem anderen Zustand;
- Fig. 3:: einen erfindungsgemäßen Mobilkonvektomaten;
- Fig. 4:: dem Mobilkonvektomaten aus Fig. 3 in einem anderen Zustand;

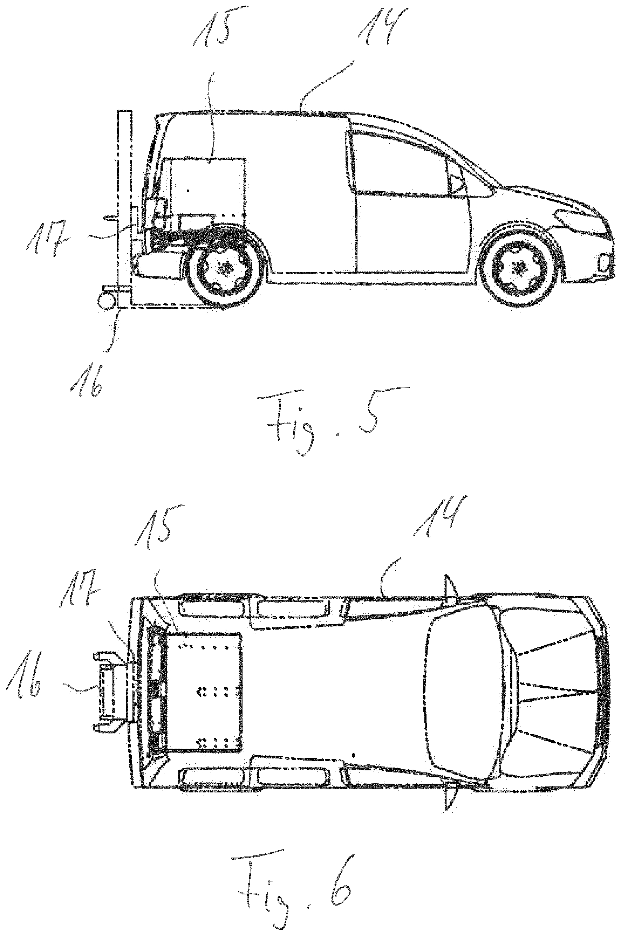

- Fig. 5-6:: das Fahrzeug aus Fig. 2 in einer Seitenansicht und einer Ansicht von oben;
- Fig. 7:: ein erfindungsgemäßes Andockmodul in einer Ansicht von oben;
- Fig. 8:: das Andockmodul aus Fig. 7 in einer Ansicht von hinten;
- Fig. 9:: das Andockmodul aus Fig. 7 in einer Seitenansicht;
- Fig. 10:: den Mobilkonvektomaten aus Fig. 4 in einer Ansicht von hinten;
- Fig. 11:: den Mobilkonvektomaten aus Fig. 4 in einer Seitenansicht;

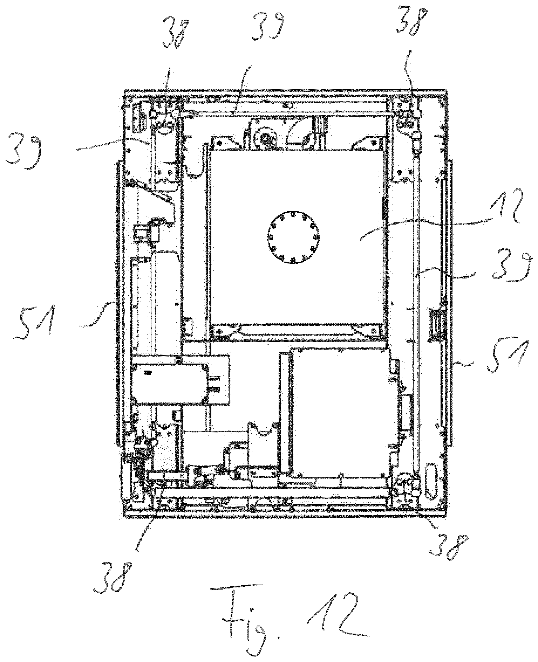

- Fig. 12:: den Mobilkonvektomaten aus Fig. 4 in einer Ansicht von unten;
- Fig. 13-14:: verschiedene Ansichten eines erfindungsgemäßen Heizmoduls.

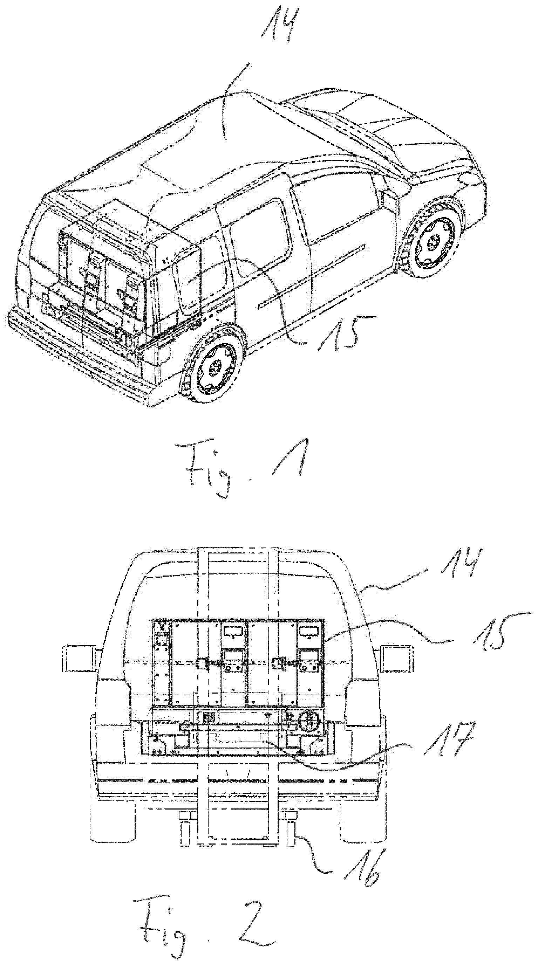

Ein Fahrzeug 14 in Fig. 1 in Form eines kleinen Lieferwagens hat eine Ladefläche, auf der ein Mobilkonvektomat 15 montiert ist. Das Fahrzeug 14 hat zwei seitlich öffnende Hecktüren. Nach Öffnen der Hecktüren ist die Rückseite des Mobilkonvektomaten 15 frei zugänglich.

In Fig. 2 ist das Fahrzeug 14 in einem Zustand gezeigt, in dem bei geöffneten Hecktüren ein Hubwagen 16 von hinten an das Fahrzeug 14 herangefahren ist, so dass die Gabel 17 des Hubwagens 16 zwischen der Ladefläche des Fahrzeugs 14 und der Unterseite des Mobilkonvektomaten 15 eingeführt ist. Mit dem Hubwagen 16 kann der Mobilkonvektomat 15 angehoben werden und nach hinten aus dem Laderaum des Fahrzeugs 14 herausgefahren werden.

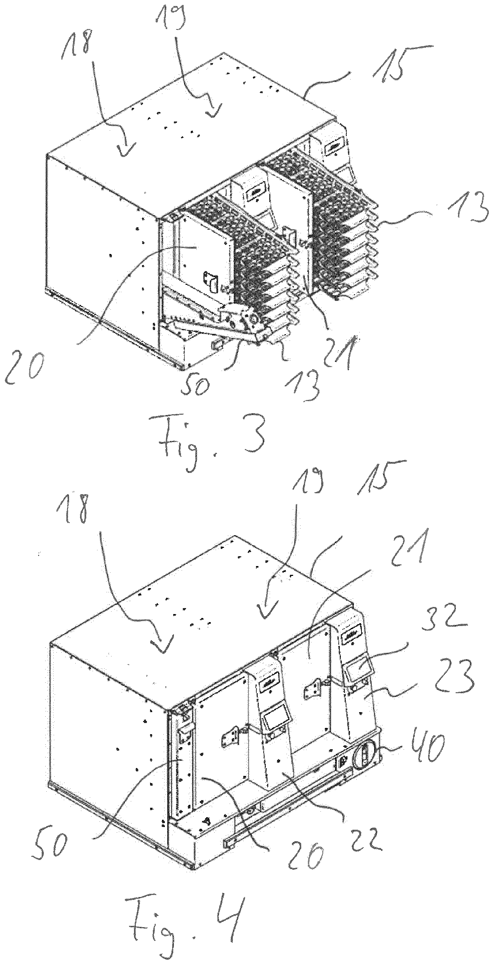

Der Mobilkonvektomat 15 hat gemäß Fig. 3-4 zwei Heizkammern 18, 19, die mit Türen 20, 21 verschließbar sind. Jede der Heizkammern 18, 19 ist mit sieben übereinander angeordneten Schubböden 13 ausgestattet, auf denen jeweils drei vorzubereitete Menüs Platz finden. Die Menüs werden auf der Fahrt zum Kunden erwärmt, so dass sie bei der Übergabe an den Kunden verzehrfertig sind. Der ersten Heizkammer 18 ist zu diesem Zweck ein erstes Heizmodul 22 zugeordnet, der zweiten Heizkammer 19 ist ein zweites Heizmodul 23 zugeordnet.

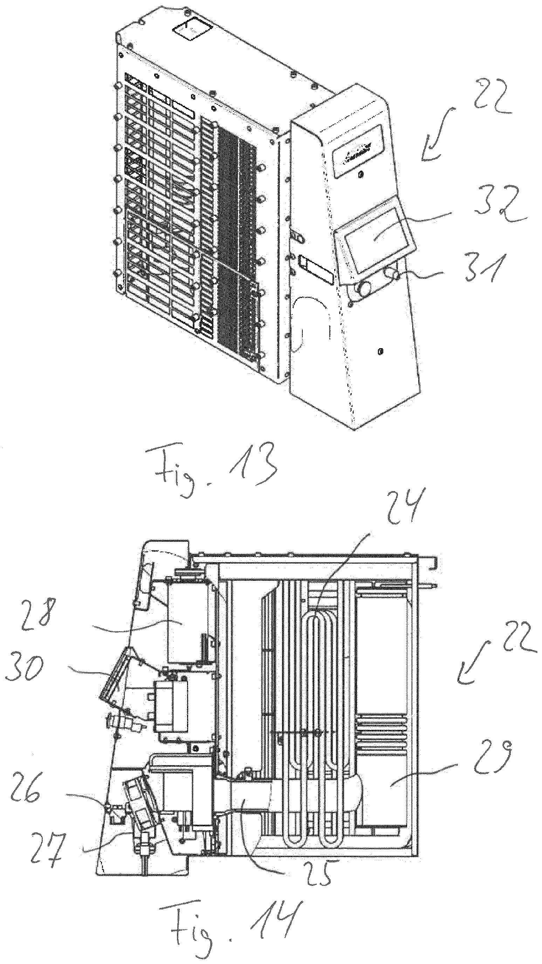

Die Heizmodule 22, 23 sind bauliche Einheiten, die als Ganzes aus dem Gehäuse des Mobilkonvektomaten 15 entnommen werden können. In den Fig. 13-14 ist das erste Heizmodul 22 gezeigt, das zweite Heizmodul 23 ist identisch aufgebaut. Das erste Heizmodul 22 umfasst eine elektrisch betriebene Heizeinrichtung 24 und eine kraftstoffbetriebene Heizeinrichtung 25. Die elektrische Heizeinrichtung 24 kann über einen 230V-Stecker 26 an das stationäre Stromnetz angeschlossen werden, so dass die elektrische Energie für die Heizeinrichtung 24 aus dem stationären Stromnetz bereitgestellt wird. Die kraftstoffbetriebene Heizeinrichtung 25 umfasst einen Dieselbrenner, dem mit einer Pumpe 27 Dieselkraftstoff aus einem Tank 12 zugeführt wird.

Der Tank 12 wird über einen Einfüllstutzen 50 befüllt, der über einen Schwenkmechanismus mit dem Gehäuse des Mobilkonvektomaten verbunden ist. Der Einfüllstutzen 50 ist in Fig. 3 in einem ausgefahrenen Zustand und in Fig. 4 in einem eingefahrenen Zustand gezeigt. Im ausgefahrenen Zustand ragt der Einfüllstutzen 50 so weit nach außen, dass er außerhalb des Innenraums des Fahrzeugs 14 angeordnet ist. Dadurch wird ein gefahrloses Befüllen des Tanks 12 ermöglicht.

Der Mobilkonvektomat 15 umfasst ein Umluftgebläse 28, mit dem ein kontinuierlicher Luftstrom angetrieben wird, der sich durch die zugehörige Heizkammer 18 und durch einen Wärmetauscher 29 erstreckt. In dem Wärmetauscher 29 wird die Luft erwärmt, wobei die Wärmeenergie je nach Betriebszustand entweder von der elektrischen Heizeinrichtung 24 oder von der kraftstoffbetriebenen Heizeinrichtung 25 bereitgestellt wird. Eine Steuereinheit 30 steuert das Zusammenwirken der Komponenten des ersten Heizmoduls 22. Die Bedienung des Heizmoduls 22 erfolgt über Bedienknöpfe 31 sowie ein Display 32.

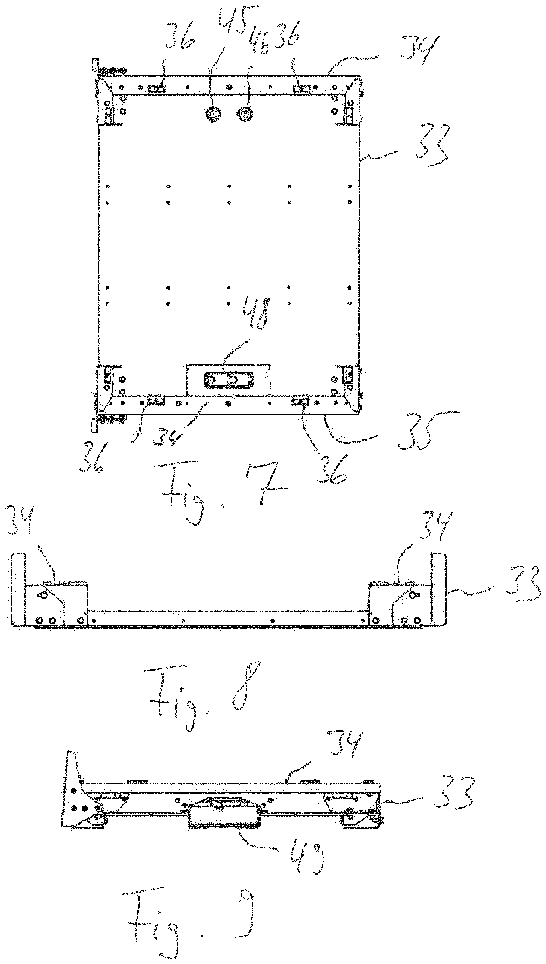

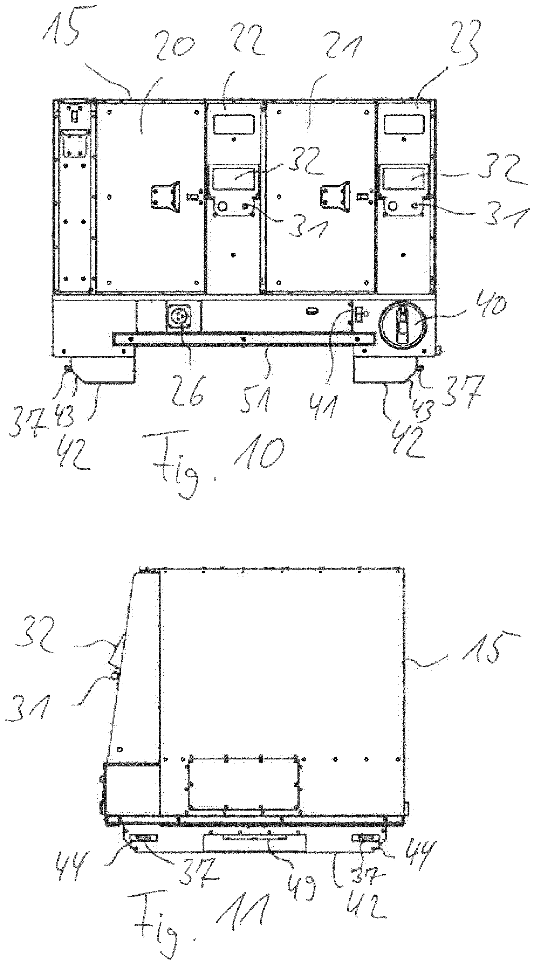

Mit dem Boden der Ladefläche des Fahrzeugs 14 ist ein Andockmodul 33 verbunden, siehe Fig. 7-9. Das Andockmodul 33 umfasst zwei seitliche Längsträger 34, 35, auf denen der Mobilkonvektomat 15 aufliegt, wenn er in dem Fahrzeug 14 betrieben wird. Jeder der Längsträger 34, 35 umfasst eine Verriegelungsstruktur in Form von zwei Ausnehmungen 36, die mit Drehriegeln 37 des Mobilkonvektomaten 15 Zusammenwirken, um den Mobilkonvektomaten 15 mit dem Andockmodul 33 zu verriegeln. Jeder der Drehriegel 37 ist bezogen auf eine vertikale Achse 38 drehbar gelagert. In Fig. 10 ist der Verriegelungszustand des Drehriegels 37 dargestellt. Im entriegelten Zustand ist der Drehriegel 37 innerhalb des Rahmenteils 42 versenkt. Die Drehriegel 37 sind über Koppelstangen 39 miteinander gekoppelt, so dass das Umschalten der Drehriegel 37 zwischen dem verriegelten Zustand und dem entriegeltem Zustand synchron erfolgt. Die Betätigung des Verriegelungsmechanismus erfolgt mit einem Handrad 40. Im verriegelten Zustand rastet der Verriegelungsmechanismus ein. Ein Betätigen des Verriegelungsmechanismus aus dem vorigen Zustand heraus ist erst möglich, nachdem mit einem Betätigungselement 41 eine Sperre gelöst wurde.

Der Mobilkonvektomat 15 hat zwei nach unten vorspringende Rahmenteile 42, die auf den seitlichen Trägern 34 des Andockmoduls 33 aufliegen, wenn der Mobilkonvektomat 15 mit dem Andockmodul 33 verbunden ist. Die Rahmenteile 42 haben in seitlicher Richtung wirksame Einführschrägen 43 und in Längsrichtung wirksame Einführschrägen 44, so dass der Mobilkonvektomat 15 sich selbsttätig in der richtigen Position zentriert, wenn er von oben auf das Andockmodul 33 aufgesetzt wird.

Mit dem Aufsetzen des Mobilkonvektomaten 15 auf das Andockmodul 33 wird ein an den Dieselbrenner 25 angeschlossener erster Abschnitt einer Abgasleitung mit einem an das Andockmodul 33 angeschlossenen zweiten Abschnitt einer Abgasleitung gekoppelt, indem ein Kupplungsstück 45 des Andockmoduls 33 mit einem dazu passenden Kupplungsstück des Mobilkonvektomaten gekuppelt wird. Auf entsprechende Weise wird über ein zweites Kupplungsstück 46 eine Verbindung zu der Abgasleitung des zweiten Dieselbrenners hergestellt. Die von dem Andockmodul 33 kommenden Abgasleitungen sind durch die Karosserie des Fahrzeugs 14 hindurch nach außen geführt, so dass ein freies Ende der Abgasleitungen außerhalb des Innenraums des Fahrzeugs 14 mündet.

Das Andockmodul 33 ist mit einem elektrischen Steckverbinder 48 versehen, der an das elektrische Netz des Fahrzeugs 14 angeschlossen ist. Mit dem Aufsetzen des Mobilkonvektomaten 15 auf das Andockmodul 33 wird eine elektrische Verbindung mit einem passenden Gegenstück 49 des Mobilkonvektomaten 15 hergestellt. Die über die Steckverbindung 48, 49 übertragene elektrische Energie dient dazu, eine Batterie des Mobilkonvektomaten 15 aufzuladen, mit der die Steuereinheit 30 sowie das Umluftgebläse 28 der Heizmodule 22, 23 betrieben werden. Das Andockmodul 33 umfasst ein Trennrelais 49, mit dem sichergestellt wird, dass der Mobilkonvektomat 15 nur dann Energie aus dem elektrischen Netz des Fahrzeugs 14 beziehen kann, wenn der Motor in Betrieb ist und die Lichtmaschine elektrische Energie liefert. Auf diese Weise wird verhindert, dass die Batterie des Fahrzeugs 14 durch den Mobilkonvektomaten 15 entladen werden kann.

Wenn der Mobilkonvektomat 15 auf dem Andockmodul 33 aufliegt, bleibt zwischen der Unterseite des Mobilkonvektomaten 15 und dem Boden der Ladefläche des Fahrzeugs 14 ein Freiraum, in dem die Gabel 17 eines Hubwagens 16 eingeführt werden kann. Der Mobilkonvektomat 15 hat zwischen den Rahmenteilen 42 eine Hebestruktur 51, an der die Gabel 17 des Hubwagens 16 beim Anheben des Mobilkonvektomaten 15 angreift.

Der erfindungsgemäße Mobilkonvektomat 15 kann so betrieben werden, dass die Heizkammern 18, 19 des Mobilkonvektomaten 15 in einer Lagerhalle mit vorzubereiteten Menüs gefüllt werden. Die elektrische Heizeinrichtung 24, die über den Stecker 26 mit dem stationären Stromnetz verbunden ist, kann in der Lagerhalle in Betrieb gesetzt werden, um eine erste Phase des Aufwärmvorgangs der Menüs durchzuführen. Erst kurz vor Beginn der Auslieferung wird die Verbindung zum stationären Stromnetz getrennt und der Mobilkonvektomat 15 mit dem Hubwagen 16 auf das Andockmodul 33 eines Fahrzeugs 14 aufgesetzt. Beim Aufsetzen des Mobilkonvektomaten wird selbsttätig eine Verbindung zu dem Kupplungsstück 45, 46 der Abgasleitungen hergestellt und eine elektrische Verbindung zu dem Steckverbinder 48 gebildet.

Durch Betätigen des Handrads 40 werden die Drehriegel 37 des Mobilkonvektomaten 15 mit dem Ausnehmungen 36 des Andockmoduls 33 in Eingriff gebracht, um den Mobilkonvektomaten 15 mit dem Andockmodul 33 zu verriegeln. Anschließend kann der Aufwärmvorgang unter Verwendung des Dieselbrenners 25 fortgesetzt werden.

Die Steuereinheit 30 ermittelt die Parameter der ersten Phase des Aufwärmvorgangs, wie beispielsweise die Dauer und die zugeführte Energie. Die Steuereinheit 30 misst außerdem die Länge der Pause zwischen der ersten Phase und der zweiten Phase des Aufwärmvorgangs. Auf Basis dieser Informationen kann die Steuereinheit 30 den Dieselbrenner 25 in geeigneter Weise ansteuern, so dass die Menüs bei der Auslieferung an die Kunden verzehrfertig sind.

Nach Auslieferung aller Menüs kann der Mobilkonvektomat 15 wieder von dem Andockmodul 33 getrennt werden. Das Fahrzeug 14 steht damit für andere Transportzwecke zur Verfügung. Schäden an dem Andockmodul 33 können vermieden werden, indem das Andockmodul 33 mit einer geeigneten Abdeckung versehen wird.

## Patentansprüche

1. System aus einem Mobilkonvektomaten (15) und einem Andockmodul (33), wobei das Andockmodul (33) dazu ausgelegt ist, mit einem Fahrzeug (14) verbunden zu werden und den Mobilkonvektomaten (15) zu tragen, wobei der Mobilkonvektomat (15) eine kraftstoffbetriebene Heizeinrichtung (25) und eine Heizkammer (18, 19) zum Aufwärmen vorzubereiteter Menüs aufweist, mit einem Verriegelungsmechanismus (36, 37), der umschaltbar ist zwischen einem verriegelten Zustand, in dem der Mobilkonvektomat (15) mit dem Andockmodul (33) verriegelt ist, und einem entriegeltem Zustand, in dem der Mobilkonvektomat (15) ohne Verriegelung auf dem Andockmodul (33) aufliegt, wobei der Mobilkonvektomat (15) eine Hebestruktur (51) aufweist, die für ein Hubgerät (16) zugänglich ist, wenn der Mobilkonvektomat (15) auf dem Andockmodul (33) aufliegt, **dadurch gekennzeichnet, dass** der Mobilkonvektomat (15) einen Einfüllstutzen (50) für Kraftstoff umfasst, der zwischen einem eingefahrenen Zustand und einem ausgefahrenen Zustand verfahrbar ist.

2. System nach Anspruch 1, **dadurch gekennzeichnet, dass** die Hebestruktur (51) an der Unterseite des Mobilkonvektomaten (15) angeordnet ist.

3. System nach Anspruch 1 oder 2, **dadurch gekennzeichnet, dass** das Andockmodul (33) zwei Längsträger (34, 35) umfasst, zwischen denen die Hebestruktur (51) angeordnet ist, wenn der Mobilkonvektomat (15) auf dem Andockmodul (33) aufliegt.

4. System nach einem der Ansprüche 1 bis 3, **dadurch gekennzeichnet, dass** das Andockmodul (33) und/oder der Mobilkonvektomat (15) mit Einführschrägen (43, 44) versehen sind, so dass der Mobilkonvektomat (15) sich beim Aufsetzen auf das Andockmodul (33) selbsttätig relativ zu dem Andockmodul (33) zentriert.

5. System nach einem der Ansprüche 1 bis 4, **dadurch gekennzeichnet, dass** der Verriegelungsmechanismus (36, 37) eine Mehrzahl von Riegeln (37) umfasst, die miteinander gekoppelt sind.

6. System nach Anspruch 5, **dadurch gekennzeichnet, dass** der Mobilkonvektomat (15) ein Betätigungselement (40) zur gekoppelten Betätigung des Verriegelungsmechanismus 36, 37) umfasst.

7. System nach einem der Ansprüche 1 bis 6, **dadurch gekennzeichnet, dass** der Mobilkonvektomat (15) eine kraftstoffbetriebene Heizeinrichtung (25) umfasst.

8. System nach einem der Ansprüche 1 bis 7 **dadurch gekennzeichnet, dass** der Mobilkonvektomat (15) eine elektrisch betriebene Heizeinrichtung (24) umfasst.

9. System nach Anspruch 8, **dadurch gekennzeichnet, dass** der Mobilkonvektomat (15) einen Stecker (26) zum Verbinden der elektrisch betriebenen Heizeinrichtung (24) mit einem stationären Stromnetz umfasst.

10. System nach einem der Ansprüche 1 bis 9, **dadurch gekennzeichnet, dass** der Mobilkonvektomat (15) eine Steuereinheit (30) umfasst, die dazu ausgelegt ist, einen zweigeteilten Aufwärmvorgang anzusteuern, bei dem ein erster Teil des Aufwärmvorgangs in einem stationären Zustand erfolgt, in dem der Mobilkonvektomat (15) von dem Fahrzeug (14) getrennt ist, und bei dem ein zweiter Teil des Aufwärmvorgangs in einem mobilen Zustand erfolgt, in dem der Mobilkonvektomat (15) mit dem Fahrzeug (14) verbunden ist.

11. System nach einem der Ansprüche 1 bis 10, **dadurch gekennzeichnet, dass** zwischen dem Mobilkonvektomaten (15) und dem Andockmodul (33) eine elektrische Steckverbindung (48, 49) besteht, die mit dem Aufsetzen des Mobilkonvektomaten (15) auf das Andockmodul (33) in Eingriff gebracht wird.

12. System nach einem der Ansprüche 1 bis 11, **gekennzeichnet durch** eine Abgasleitung, die dazu bestimmt ist, aus dem Innenraum eines Fahrzeugs (14) nach außen geführt zu werden, wobei die Abgasleitung eine Schnittstelle (45, 46) aufweist, die getrennt wird, wenn der Mobilkonvektomat (15) von dem Andockmodul (33) abgehoben wird, und die verbunden wird, wenn der Mobilkonvektomat (15) auf das Andockmodul (33) aufgesetzt wird.

13. Fahrzeug, umfassend ein System nach einem der Ansprüche 1 bis 12, wobei das Andockmodul (33) mit dem Fahrzeug (14) verbunden ist.

14. Verfahren zum Aufwärmen vorzubereiteter Menüs, bei dem ein oder mehrere vorzubereitete Menüs in eine Heizkammer (18, 19) eines Mobilkonvektomaten (15) eingebracht werden, bei dem eine erste Phase des Aufwärmvorgangs in einem stationären Betrieb durchgeführt wird, in dem eine Heizeinrichtung (24) der Heizkammer (18, 19) aus einem stationären Stromnetz gespeist wird, bei dem der Mobilkonvektomat (15) durch ein Hubgerät (16) auf ein Andockmodul (33) in einem Fahrzeug (14) aufgelegt wird, und bei dem eine zweite Phase des Aufwärmvorgangs in einem mobilen Betrieb durchgeführt wird, in dem der Mobilkonvektomat (15) mit dem Fahrzeug (14) verbunden ist und in dem eine Heizeinrichtung (24, 25) der Heizkammer (18, 19) aus einer mit dem Fahrzeug verbundenen Energiequelle (12) gespeist wird, wobei der Mobilkonvektomat (15) eine kraftstoffbetriebene Heizeinrichtung (25) umfasst, **dadurch gekennzeichnet,**
**dass** der Mobilkonvektomat (15) einen Einfüllstutzen (50) für Kraftstoff umfasst, der zwischen einem eingefahrenen Zustand und einem ausgefahrenen Zustand verfahrbar ist.

## Claims

1. System comprising a mobile convection oven (15) and a docking module (33), the docking module (33) being designed to be connected to a vehicle (14) and to support the mobile convection oven (15), the mobile convection oven (15) having a fuel-operated heating device (25) and a heating chamber (18, 19) for heating up preprepared meals, comprising a locking mechanism (36, 37) capable of being switched over between a locked state, in which the mobile convection oven (15) is locked with the docking module (33), and an unlocked state, in which the mobile convection oven (15) bears on the docking module (33) without locking, the mobile convection oven (15) having a lifting structure (51) accessible to a lifting apparatus (16) when the mobile convection oven (15) bears on the docking module (33), **characterized in that** the mobile convection oven (15) comprises a filler neck (50) for fuel, which is movable between a retracted state and an extended state.

2. System according to Claim 1, **characterized in that** the lifting structure (51) is arranged on the underside of the mobile convection oven (15).

3. System according to Claim 1 or 2, **characterized in that** the docking module (33) comprises two longitudinal supports (34, 35), between which the lifting structure (51) is arranged when the mobile convection oven (15) bears on the docking module (33).

4. System according to any of Claims 1 to 3, **characterized in that** the docking module (33) and/or the mobile convection oven (15) are/is provided with insertion bevels (43, 44), such that the mobile convection oven (15), upon being placed onto the docking module (33), automatically centres itself relative to the docking module (33).

5. System according to any of Claims 1 to 4, **characterized in that** the locking mechanism (36, 37) comprises a plurality of bolts (37) coupled to one another.

6. System according to Claim 5, **characterized in that** the mobile convection oven (15) comprises an actuation element (40) for the coupled actuation of the locking mechanism (36, 37).

7. System according to any of Claims 1 to 6, **characterized in that** the mobile convection oven (15) comprises a fuel-operated heating device (25).

8. System according to any of Claims 1 to 7, **characterized in that** the mobile convection oven (15) comprises an electrically operated heating device (24).

9. System according to Claim 8, **characterized in that** the mobile convection oven (15) comprises a plug (26) for connecting the electrically operated heating device (24) to a stationary power supply system.

10. System according to any of Claims 1 to 9, **characterized in that** the mobile convection oven (15) comprises a control unit (30) designed to control a twopart heating-up process, in which a first part of the heating-up process takes place in a stationary state in which the mobile convection oven (15) is disconnected from the vehicle (14), and in which a second part of the heating-up process takes place in a mobile state in which the mobile convection oven (15) is connected to the vehicle (14).

11. System according to any of Claims 1 to 10, **characterized in that** there is an electrical plug connection (48, 49) between the mobile convection oven (15) and the docking module (33), said electrical plug connection being engaged upon the mobile convection oven (15) being placed onto the docking module (33).

12. System according to any of Claims 1 to 11, **characterized by** an exhaust gas line intended for being led out of the interior of a vehicle (14) towards the outside, the exhaust gas line having an interface (45, 46) which is disconnected when the mobile convection oven (15) is lifted off the docking module (33), and which is connected when the mobile convection oven (15) is placed onto the docking module (33).

13. Vehicle comprising a system according to any of Claims 1 to 12, wherein the docking module (33) is connected to the vehicle (14).

14. Method for heating up preprepared meals, wherein one or more preprepared meals are introduced into a heating chamber (18, 19) of a mobile convection oven (15), wherein a first phase of the heating-up process is carried out in a stationary mode of operation in which a heating device (24) of the heating chamber (18, 19) is fed from a stationary power supply system, wherein the mobile convection oven (15) is placed onto a docking module (33) in a vehicle (14) by a lifting apparatus (16), and wherein a second phase of the heating-up process is carried out in a mobile mode of operation in which the mobile convection oven (15) is connected to the vehicle (14) and in which a heating device (24, 25) of the heating chamber (18, 19) is fed from an energy source (12) connected to the vehicle, the mobile convection oven (15) comprising a fuel-operated heating device (25), **characterized in that** the mobile convection oven (15) comprises a filler neck (50) for fuel, which is movable between a retracted state and an extended state.

## Revendications

1. Système comprenant une machine à convection mobile (15) et un module d'accueil (33), le module d'accueil (33) étant conçu pour être relié à un véhicule (14) et pour porter la machine à convection mobile (15), la machine à convection mobile (15) comportant un dispositif de chauffage (25) fonctionnant avec du carburant et une chambre de chauffage (18, 19) pour réchauffer des plats préparés, un mécanisme de verrouillage (36, 37) étant prévu qui peut être commuté entre un état verrouillé, dans lequel la machine à convection mobile (15) est verrouillée au module d'accueil (33), et un état déverrouillé dans lequel la machine à convection mobile (15) vient en appui sur le module d'accueil (33) sans être verrouillée à celui-ci, la machine à convection mobile (15) comportant une structure de levage (51) qui est accessible à un appareil de levage (16) lorsque la machine à convection mobile (15) est en appui sur le module d'accueil (33), **caractérisé en ce que** la machine à convection mobile (15) comprend une tubulure de remplissage (50) qui est destinée au carburant et qui peut être déplacée entre un état rétracté et un état déployé.

2. Système selon la revendication 1, **caractérisé en ce que** la structure de levage (51) est disposée sur le côté inférieur de la machine à convection mobile (15).

3. Système selon la revendication 1 ou 2, **caractérisé en ce que** le module d'accueil (33) comprend deux supports longitudinaux (34, 35), entre lesquels est disposée la structure de levage (51) lorsque la machine à convection mobile (15) est en appui sur le module d'accueil (33) .

4. Système selon l'une des revendications 1 à 3, **caractérisé en ce que** le module d'accueil (33) et/ou la machine à convection mobile (15) sont munis de biseaux d'insertion (43, 44) permettant de centrer la machine à convection mobile (15) par rapport au module d'accueil (33) lorsqu'elle est placée sur le module d'accueil (33) .

5. Système selon l'une des revendications 1 à 4, **caractérisé en ce que** le mécanisme de verrouillage (36, 37) comprend une pluralité de loquets (37) qui sont accouplés les uns aux autres.

6. Système selon la revendication 5, **caractérisé en ce que** la machine à convection mobile (15) comprend un élément d'actionnement (40) destiné à effectuer l'actionnement couplé du mécanisme de verrouillage (36, 37) .

7. Système selon l'une des revendications 1 à 6, **caractérisé en ce que** la machine à convection mobile (15) comprend un dispositif de chauffage (25) fonctionnant avec du carburant.

8. Système selon l'une des revendications 1 à 7, **caractérisé en ce que** la machine à convection mobile (15) comprend un dispositif de chauffage électrique (24) .

9. Système selon la revendication 8, **caractérisé en ce que** la machine à convection mobile (15) comprend un connecteur enfichable (26) destiné à relier le dispositif de chauffage électrique (24) à un réseau électrique fixe.

10. Système selon l'une des revendications 1 à 9, **caractérisé en ce que** la machine à convection mobile (15) comprend une unité de commande (30) qui est conçue pour commander un processus de réchauffage en deux parties dans lequel une première partie du processus de réchauffage a lieu dans un état stationnaire dans lequel la machine à convection mobile (15) est séparée du véhicule (14) et dans lequel une deuxième partie du processus de réchauffage a lieu dans un état mobile dans lequel la machine à convection mobile (15) est reliée au véhicule (14).

11. Système selon l'une des revendications 1 à 10, **caractérisé en ce qu'**une liaison enfichable électrique (48, 49) est prévue entre la machine à convection mobile (15) et le module d'accueil (33), laquelle liaison est établie lorsque la machine à convection mobile (15) est placée sur le module d'accueil (33).

12. Système selon l'une des revendications 1 à 11, **caractérisé par** une conduite de gaz d'échappement qui est destinée à être guidée vers l'extérieur depuis l'intérieur d'un véhicule (14), la conduite de gaz d'échappement comportant une interface (45, 46) qui est séparée lorsque la machine à convection mobile (15) est soulevée du module d'accueil (33) et qui est reliée lorsque la machine à convection mobile (15) est placée sur le module d'accueil (33).

13. Véhicule comprenant un système selon l'une des revendications 1 à 12, le module d'accueil (33) étant relié au véhicule (14).

14. Procédé de réchauffage de plats préparés dans lequel un ou plusieurs plats préparés sont introduits dans une chambre de chauffage (18, 19) d'une machine à convection mobile (15) dans laquelle une première phase du processus de réchauffage est mise en oeuvre dans un fonctionnement stationnaire dans lequel un dispositif de chauffage (24) de la chambre de chauffage (18, 19) est alimenté à partir d'un réseau électrique stationnaire dans lequel la machine à convection mobile (15) est placée sur un module d'accueil (33) dans un véhicule (14) par le biais d'un dispositif de levage (16), et dans laquelle une deuxième phase du processus de réchauffage est mise en oeuvre dans un fonctionnement mobile dans lequel la machine à convection mobile (15) est reliée au véhicule (14) et dans lequel un dispositif de chauffage (24, 25) de la chambre de chauffage (18, 19) est alimenté à partir d'une source d'énergie (12) reliée au véhicule, la machine à convection mobile (15) comprenant un dispositif de chauffage (25) fonctionnant avec du carburant, **caractérisé en ce que** la machine à convection mobile (15) comprend une tubulure de remplissage (50) qui est destinée au carburant et qui peut être déplacée entre un état rétracté et un état déployé.
